# EUROPEAN PATENT SPECIFICATION

(11) **EP 3 718 894 B1**
(45) Date of publication and mention of the grant of the patent: **14.02.2024**
(21) Application number: 20167048.6
(22) Date of filing: 31.03.2020
(51) Int. Cl.: B64D 11/06, H01H 1/38, B60N 2/68, B60N 2/64, B60N 3/00

(54) **SEAT BACK**
SITZLEHNE
DOSSIER DE SIÈGE

(30) Priority: 01.04.2019 GB 201904551
(43) Date of publication of application: 07.10.2020
(73) Proprietor: Acro Aircraft Seating Limited, Crick, Northamptonshire NN6 7SL (GB)
(72) Inventor: CHALLENOR, Adam James, Crawley, West Sussex RH11 0PR (GB)
(74) Representative: Sweetinburgh, Mark Roger

(56) References cited:
- EP-A1- 3 219 616
- WO-A1-2016/033149
- WO-A1-2017/155566
- US-A1- 2017 217 347

## Description

The present invention relates to seat backs for aircraft seats.

Various types of aircraft seat are known which generally comprise a seat base, a seat back and one or more armrests. In order to satisfy airline requirements, it is beneficial to make aircraft seats lighter and to minimise the space that they occupy on an aircraft.

The desire to make aircraft seats lighter often conflicts with the need to make aircraft seats sufficiently strong to survive not only an impact but also everyday wear and tear. The desire to make aircraft seats lighter also conflicts with the expectation of passengers to be provided with an aircraft seat which is not only comfortable, but which also includes various conveniences, such as tray tables, electronics, and so on.

US2017/0217347 describes a thermoplastic seatback for a passenger seat. WO2017/155566 describes an aircraft seat back which includes a unitary structural core formed as a single piece that includes a body and a flange.

It is, therefore, an object of the present invention to seek to alleviate the above identified problems.

### SUMMARY OF THE INVENTION

According to one aspect of the present invention, there is provided a seat back for an aircraft seat, the seat back comprising a body, wherein the body comprises a support wall for supporting a passenger leaning against the seat back, a first side wall, a second side wall and a cross brace, wherein the cross brace connects the first side wall and the second side wall at a position between a lower end and an upper end of each of the side walls, and wherein the support wall, the first side wall, the second side wall and the cross brace are integrally formed, characterised in that the cross brace is formed by a recess in the support wall of the body and comprises a rear wall.

Remarkably, the present invention provides a seat back which is not only strong, due to the provision of a support wall, cross brace and side walls, but which is also light by virtue of the cross brace being integrally formed with the support wall and the side walls such that no joints are required. As will be appreciated, in known seat backs in which various structural components are joined together, the joints formed by the various connections must be strong which, in turn, means that the size of the joining ends of the components must be increased to provide a sufficiently secure connection, be this via welding or via connection with bolts. The increase in size and the requirement for welding and/or bolts, results in a heavy seat back, a problem not shared by the seat back of the present invention. The use of multiple components also results in increased assembly times during manufacture, which is also a problem not shared by the present invention.

In specific embodiments of the invention described below, the integrally formed cross brace not only provides strength to the seat back but also provides other functions, such as forming the base of a literature pocket and supporting a latch for a tray table.

A seat back according to appended claim 1 is disclosed. Preferable embodiments are disclosed in the appended dependent claims.

It will be appreciated that reference to "one or more" includes reference to "a plurality".

Within this specification, "integrally formed" means formed as a single piece. That is, the rear wall, side walls and cross brace are not formed of separate pieces which are then joined together.

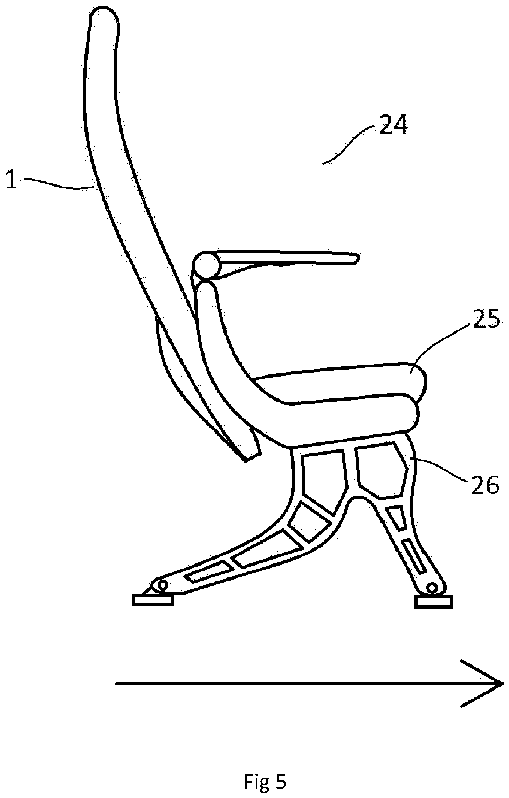

With this specification, "substantially U-shaped" includes reference to "U-shaped". Within this specification, reference to "composite material" includes reference to a carbon fibre composite material, for example, a carbon-fibre-reinforced polymer. Within this specification, it will be appreciated that reference to rear, rearward and forward is with reference to the direction of travel of an aircraft seat comprising a seat back as described herein, as shown by the arrow in Figure 5.

Within this specification, it will be appreciated that reference to top, bottom, upper and lower, is with reference to the orientation of an aircraft seat comprising a seat back as described herein, for example when standing on a flat surface in an upright, non-reclined position.

Within this specification embodiments have been described in a way which enables a clear and concise specification to be written, but it is intended and will be appreciated that embodiments may be variously combined or separated without parting from the invention, which is defined by the appended claims.

### DETAILED DESCRIPTION

Example embodiments of the present invention will now be described with reference to the accompanying Figures, in which
Figure 1A shows a rear perspective view of a body of a seat back of the present invention;
Figure 1B shows a front perspective view of a body of a seat back of the present invention;
Figure 1C shows a front perspective view of a panel of a seat back of the present invention in which the two halves are joined together;
Figure 1D shows a front perspective view of a panel of a seat back of the present invention in which the two halves are shown as separate pieces;
Figure 2 shows a front perspective view of a seat back of the present invention which includes both the body and the panel;
Figure 3A shows a rear perspective view of a seat back of the present invention which includes a cover, tray table and literature pocket;
Figure 3B shows a rear perspective view of the seat back shown in Figure 3A with the cover, tray table and cross panel of the literature pocket in an exploded view;
Figure 4 shows a rear view of the cover showing the internal components thereof;
Figure 5 shows a side view of an aircraft seat comprising a seat back of the present invention; and
Figure 6 shows a rear view of a row of aircraft seats each comprising a seat back of the present invention.

The present invention relates to a seat back for an aircraft seat.

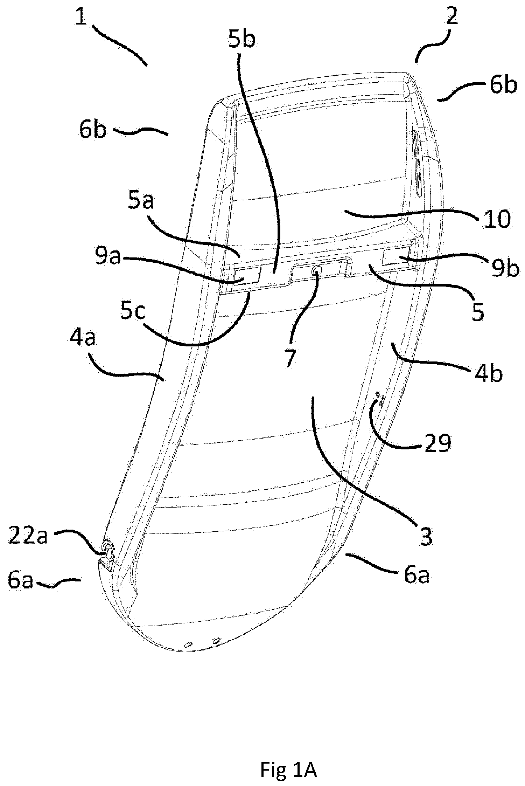

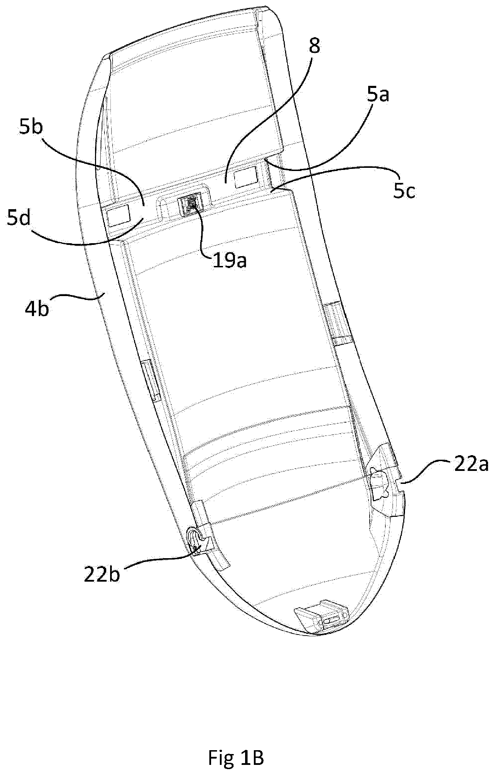

With reference to Figures, there is shown a seat back 1 for an aircraft seat. With particular reference to Figure 1A, the seat back comprises a body 2 with a support wall 3 for supporting a passenger leaning against the seat back, a first side wall 4a, a second side wall 4b and a cross brace 5. The cross brace connects the first side wall 4a and the second side wall 4b of the body at a position between a lower end 6a and an upper end 6b of each of the side walls 4a, 4b. The support wall 3, the first side wall 4a, the second side wall 4b and the cross brace 5 are integrally formed. That is, they are formed as a single piece. The cross brace 5 includes a top wall 5a, a rear wall 5b and a bottom wall 5c which form a cavity 8 (as shown in Figure 1B) with a forward-facing opening 5d. The body is formed from a carbon fibre composite.

As will be evident from the Figures, the cross brace 5 has a U-shaped cross section and is formed by a deformation in the support wall 3 of the body 2.

The cross brace 5 includes a pair of apertures 9a, 9b which provide access to the cavity 8. In preferred examples, these apertures allow one or more USB charging sockets 27a, 27b to be mounted on the seat back and for the associated cables to pass through the apertures 9a, 9b and the cavity 8.

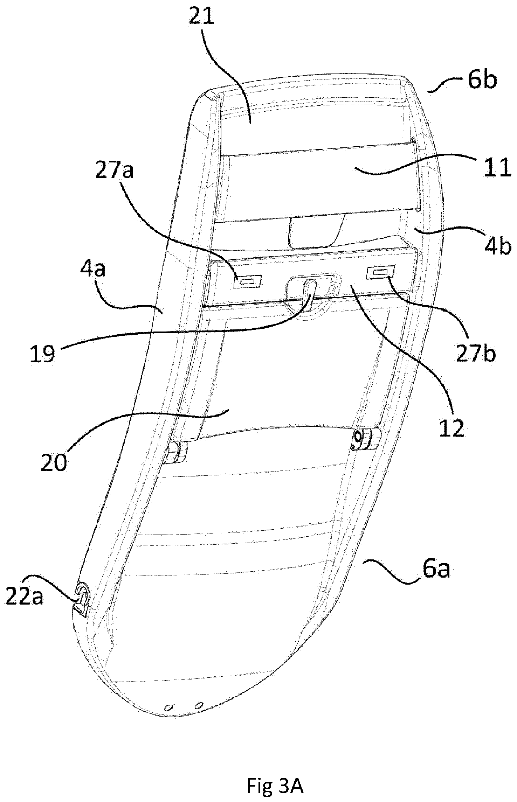

The body 2 includes a recess 10 defined by the first 4a and second 4b side walls and the top wall 5a of the cross brace 5, with the cross brace 5 forming the base of the recess 10. In the example shown, a panel 11 is positioned across the recess to form a literature pocket 21, shown in Figure 3A.

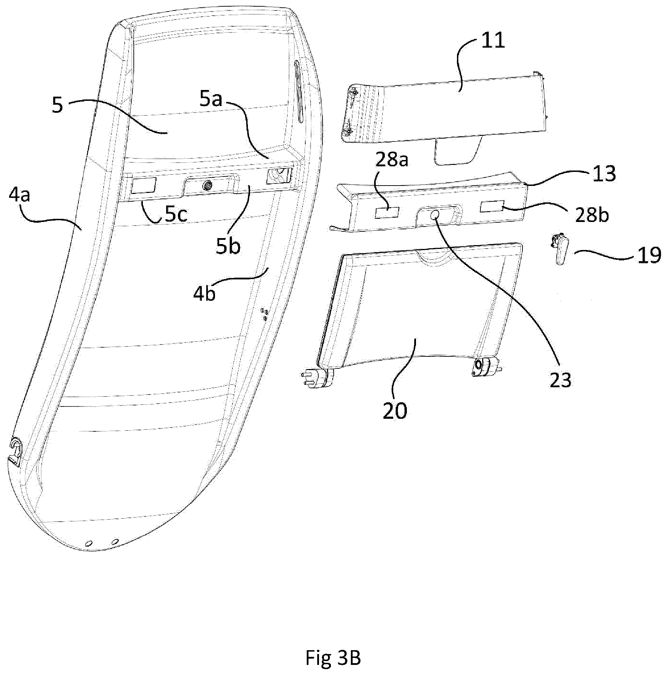

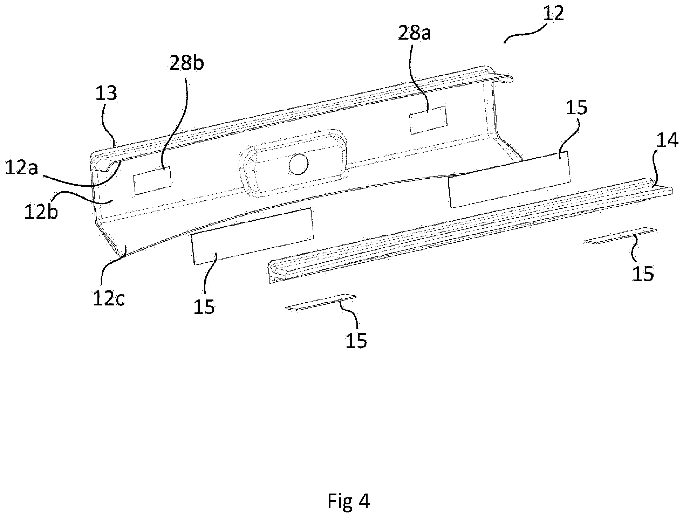

With particular reference to Figures 3A and 3B, the cover 12 is positioned around the cross brace 5. As shown in Figure 4, the cover includes top 12a, rear 12b and bottom faces 12c for positioning against the top 5a, rear 5b and bottom walls 5c of the cross brace.

The cover 12 includes a lip 13 which prevents literature from sliding out of the literature pocket 21. The lip 13 forms a hollow space between the cover 12 and the cross brace 5 which is filled with a strip of polyurethane foam 14 material. This is particularly advantageous because it minimises injury to a passenger in the event of a head impact collision.

In addition to the strip of foam 14, the cover 12 provides additional cushioning around the top 5a, rear 5b and bottom 5c walls of the cross brace 5 because it is manufactured from vacuum formed plastic with moulded polyurethane foam.

The foam 14 is secured to the cover 12 by hook and loop material 15. The cover 12 is secured to the cross brace 5 by hook and loop material 15.

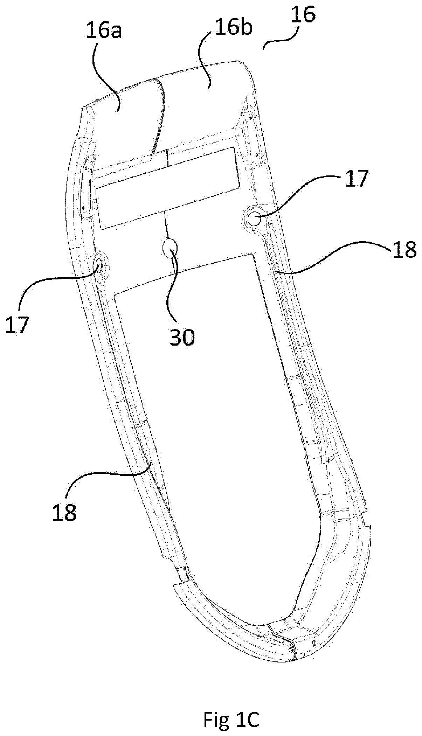

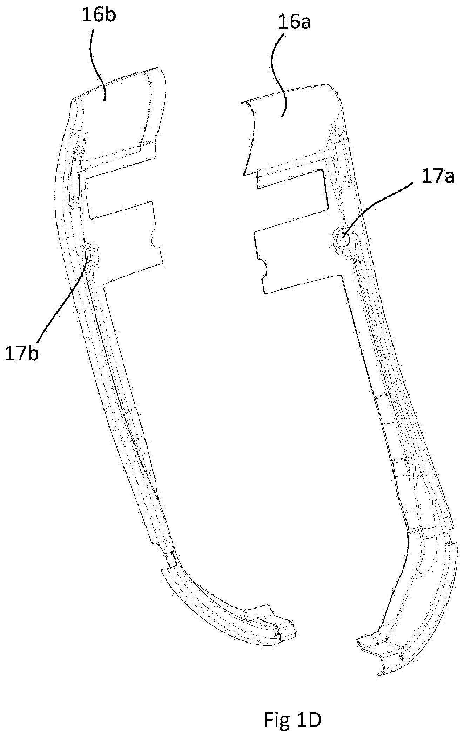

With reference to Figures 1C and 1D, in addition to the body 2, in the example shown, the seat back includes a panel 16 on the forward-facing surface of the support wall 3 of the body 2. The panel 16 covers the opening of the cross brace 2 and forms a front wall 5e thereof.

The panel is formed in two parts 16a, 16b which can be joined together. The panel includes a pair of apertures 17a, 17b which allow access to the cavity of the cross brace and which line up with the apertures 9a, 9b in the rear wall of the cross brace 2. The apertures 17a, 17b connect with channels 18 along which cables can be held, for example cables connected to USB charging sockets 27a, 27b held within the apertures 9a, 9b.

The panel also includes an aperture 30 for allowing access to a part 19a of the latch 19.

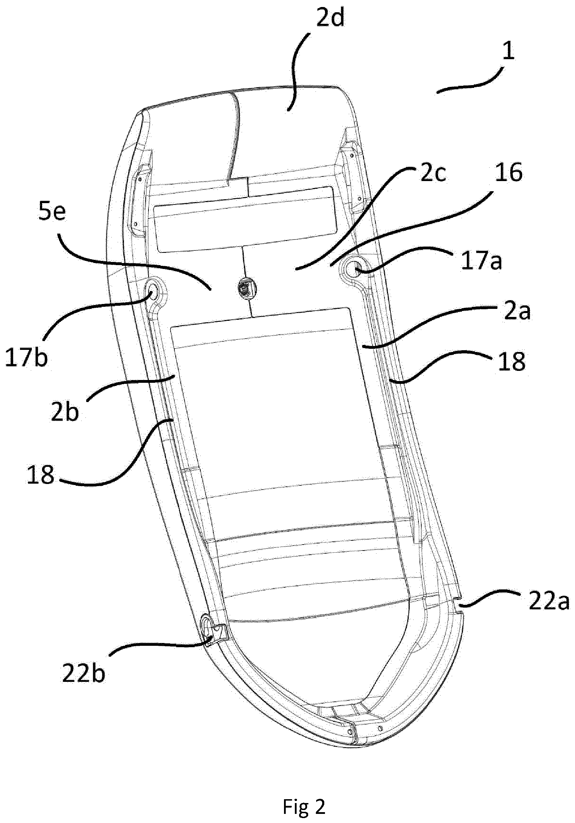

As shown with particular reference to Figure 2, the panel 16 does not cover all of the forward-facing surface of the body 2, rather it covers side areas 2a, 2b and across upper central areas 2c, 2d corresponding to the position of the cross brace and a head rest area. This maximises the strength afforded by the addition of the panel 16, whilst at the same time minimising the weight of the seat back 1.

As with the body 2, the panel 16 is formed of a carbon fibre composite material. The body 2 and the panel 16 are secured together by an adhesive.

The seat back includes a pair of connectors 22a, 22b in the form of recesses for connecting the seat back 1 to protrusions on the frame 26 of an aircraft seat 24. A latch 19 is provided for holding a tray table 20 against the seat back 1. The latch 19 passes through an aperture 23 in the cover 12 and is secured to the cross brace 2 via an aperture 7 in the cross brace within or behind which a part 19a of the latch 19 can be provided.

The tray table 20 is secured to the body 2 via holes 29.

The cover 12 also includes a pair of apertures 28a, 28b for allowing access to the internal cavity of the cross brace 5 and within which the USB charging sockets 27a, 27b are provided. The apertures 9a, 9b of the cross brace 5 and the apertures 28a, 28b of the cover 12 are aligned when the cover 12 is in position against the cross brace 5.

With reference to Figure 5, there is shown an aircraft seat 24 comprising a seat back as described herein. The seat 24 includes a seat base 25, a seat frame 26 and a seat back 1 as described herein.

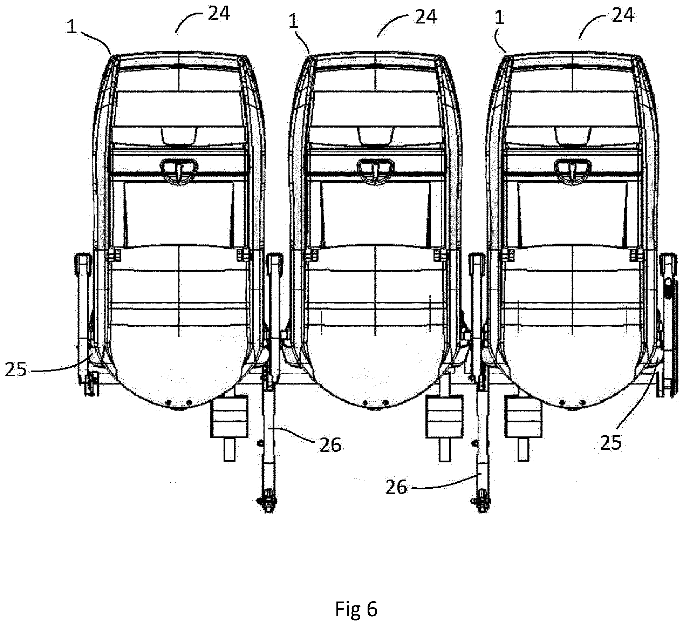

With reference to Figure 6, there is shown a row of aircraft seats comprising a seat back as described herein.

It should be understood that various changes and modifications to the presently preferred embodiments described herein will be apparent to those skilled in the art when falling within scope of the appended claims.

Such changes and modifications can be made without departing from the scope of the present invention and without diminishing its attendant advantages. It is therefore intended that such changes and modifications are covered by the appended claims.

## Claims

1. A seat back (1) for an aircraft seat, the seat back (1) comprising a body (2), wherein the body (2) comprises a support wall (3) for supporting a passenger leaning against the seat back (1), a first side wall (4a), a second side wall (4b) and a cross brace (5), wherein the cross brace (5) connects the first side wall (4a) and the second side wall (4b) at a position between a lower end (6a) and an upper end (6b) of each of the side walls (4a, 4b), and wherein the support wall (3), the first side wall (4a), the second side wall (4b) and the cross brace (5) are integrally formed, **characterised in that** the cross brace (5) is formed by a recess in the support wall (3) of the body (2) and comprises a rear wall (5b).

2. A seat back according to claim 1, wherein the cross brace (5) comprises a forward-facing opening (5d) in the body (2).

3. A seat back according to any preceding claim, wherein the cross brace (5) comprises a receiver for receiving a table latch (19).

4. A seat back according to any preceding claim, wherein the cross brace (5) comprises an internal cavity (8).

5. A seat back according to claim 4, wherein the cross brace (5) comprises one or more apertures (9a, 9b), preferably in the rear wall (5b) of the cross brace (5), for allowing access to the internal cavity (8), optionally wherein the body (2) comprises a further recess (10) defined by the first (4a) and second (4b) side walls and the cross brace (5), wherein said further recess (10) is above the cross brace (5), optionally wherein the seat back (1) comprises a cross member (11) positioned across at least a part of the further recess (10).

6. A seat back according to any preceding claim, wherein the cross brace (5) forms the base of a literature pocket (21).

7. A seat back according to any preceding claim, wherein the cross brace (5) comprises a cover (12), optionally wherein the body (2) comprises a deformable material (14) positioned between the cover (12) and the cross brace (5).

8. A seat back according to claim 7, wherein the cover (12) comprises one or more apertures (23, 28a, 28b) for allowing access to the internal cavity (8) of the cross brace (5), optionally wherein the cross brace (5) comprises an aperture (7) for receiving a table latch (19) or a component thereof and the cover (12) comprises an aperture (23) for receiving a table latch (19) or a component thereof, wherein said apertures (7, 23) of the cross brace (5) and the cover (12) are aligned when the cover (12) is in position against the cross brace (5).

9. A seat back according to claim 7 or 8, wherein the cover (12) comprises a lip (13), optionally wherein the lip (13) is on an upper surface of the cover (12), and/or wherein the cross brace (5) comprises a latch (19) for holding a tray table (20) against the seat back (1) and the latch (19) passes through an aperture (23) in the cover (12) and is secured to the cross brace (5).

10. A seat back according to any preceding claim, wherein the seat back (1) comprises a panel (16) on a forward-facing surface of the support wall (3) of the body (2), optionally wherein the panel (16) forms a front wall (5e) of the cross brace (5), and/or wherein the panel (16) comprises one or more apertures (17a, 17b), which allow access to the/a cavity (8) of the cross brace (5).

11. A seat back according to any preceding claim, wherein the seat back (1) comprises one or more apertures (17a, 17b), which allow access to the/a cavity (8) of the cross brace (5), and one or more channels (18) connected to said one or more apertures (17a, 17b) for allowing a cable to be held within said one or more channels (18) and to enter the cavity (8) of the cross brace (5) through said one or more apertures (17a, 17b).

12. A vehicle seat (24) comprising a seat back (1) according to any preceding claim.

13. A row of vehicle seats comprising a plurality of seats (24) according to claim 12.

14. A vehicle seat of claim 12 or row of vehicle seats according to claim 13, comprising an aircraft seat or seats (24).

## Patentansprüche

1. Sitzlehne (1) für einen Flugzeugsitz, wobei die Sitzlehne (1) einen Körper (2) umfasst, wobei der Körper (2) eine Stützwand (3) zum Stützen eines Passagiers, der sich gegen die Sitzlehne (1) lehnt, eine erste Seitenwand (4a), eine zweite Seitenwand (4b) und eine Querstrebe (5) umfasst, wobei die Querstrebe (5) die erste Seitenwand (4a) und die zweite Seitenwand (4b) an einer Position zwischen einem unteren Ende (6a) und einem oberen Ende (6b) jeder der Seitenwände (4a, 4b) verbindet und wobei die Stützwand (3), die erste Seitenwand (4a), die zweite Seitenwand (4b) und die Querstrebe (5) einstückig ausgebildet sind, **dadurch gekennzeichnet, dass** die Querstrebe (5) durch eine Aussparung in der Stützwand (3) des Körper (2) ausgebildet ist und eine Rückwand (5b) umfasst.

2. Sitzlehne nach Anspruch 1, wobei die Querstrebe (5) ein nach vorne gewandtes Loch (5d) in dem Körper (2) umfasst.

3. Sitzlehne nach einem vorhergehenden Anspruch, wobei die Querstrebe (5) eine Aufnahme zum Aufnehmen einer Tischverriegelung (19) umfasst.

4. Sitzlehne nach einem vorhergehenden Anspruch, wobei die Querstrebe (5) einen inneren Hohlraum (8) umfasst.

5. Sitzlehne nach Anspruch 4, wobei die Querstrebe (5) eine oder mehrere Öffnungen (9a, 9b) umfasst, vorzugsweise in der Rückwand (5b) der Querstrebe (5), um einen Zugang zu dem inneren Hohlraum (8) zu ermöglichen, optional wobei der Körper (2) eine weitere Aussparung (10) umfasst, die durch die erste (4a) und die zweite (4b) Seitenwand und die Querstrebe (5) definiert ist, wobei sich die weitere Aussparung (10) über der Querstrebe (5) befindet,
wobei optional die Sitzlehne (1) ein Querelement (11) umfasst, das über mindestens einen Teil der weiteren Aussparung (10) positioniert ist.

6. Sitzlehne nach einem vorhergehenden Anspruch, wobei die Querstrebe (5) die Basis einer Lektürentasche (21) ausbildet.

7. Sitzlehne nach einem vorhergehenden Anspruch, wobei die Querstrebe (5) eine Abdeckung (12) umfasst, wobei optional der Körper (2) ein verformbares Material (14) umfasst, das zwischen der Abdeckung (12) und der Querstrebe (5) positioniert ist.

8. Sitzlehne nach Anspruch 7, wobei die Abdeckung (12) eine oder mehrere Öffnungen (23, 28a, 28b) umfasst, um Zugang zu dem inneren Hohlraum (8) der Querstrebe (5) zu ermöglichen, wobei optional die Querstrebe (5) eine Öffnung (7) zum Aufnehmen einer Tischverriegelung (19) oder einer Komponente davon umfasst und die Abdeckung (12) eine Öffnung (23) zum Aufnehmen einer Tischverriegelung (19) oder einer Komponente davon umfasst, wobei die Öffnungen (7, 23) der Querstrebe (5) und der Abdeckung (12) ausgerichtet sind, wenn die Abdeckung (12) in Position an der Querstrebe (5) anliegt.

9. Sitzlehne nach Anspruch 7 oder 8, wobei die Abdeckung (12) einen Rand (13) umfasst, optional wobei sich der Rand (13) auf einer oberen Oberfläche der Abdeckung (12) befindet und/oder wobei die Querstrebe ( 5) eine Verriegelung (19) zum Halten eines Ablagetisches (20) an der Sitzlehne (1) umfasst und die Verriegelung (19) durch eine Öffnung (23) in der Abdeckung (12) verläuft und an der Querstrebe (5) befestigt ist.

10. Sitzlehne nach einem vorhergehenden Anspruch, wobei die Sitzlehne (1) eine Platte (16) auf einer nach vorne gewandten Oberfläche der Stützwand (3) des Körpers (2) umfasst, wobei optional die Platte (16) eine Vorderwand (5e) der Querstrebe (5) ausbildet und/oder wobei die Platte (16) eine oder mehrere Öffnungen (17a, 17b) umfasst, die einen Zugang zu dem/einem Hohlraum (8) der Querstrebe (5) ermöglichen.

11. Sitzlehne nach einem vorhergehenden Anspruch, wobei die Sitzlehne (1) eine oder mehrere Öffnungen (17a, 17b), die einen Zugang zu dem/einem Hohlraum (8) der Querstrebe (5) ermöglichen, und einen oder mehrere Kanäle (18) umfasst, die mit der einen oder den mehreren Öffnungen (17a, 17b) verbunden sind, um zu ermöglichen, dass ein Kabel innerhalb des einen oder der mehreren Kanäle (18) gehalten wird und in den Hohlraum (8) der Querstrebe (5) durch die eine oder mehreren Öffnungen (17a, 17b) eintritt.

12. Fahrzeugsitz (24), umfassend eine Sitzlehne (1) nach einem vorhergehenden Anspruch.

13. Reihe von Fahrzeugsitzen, eine Vielzahl von Sitzen (24) nach Anspruch 12 umfassend.

14. Fahrzeugsitz nach Anspruch 12 oder Reihe von Fahrzeugsitzen nach Anspruch 13, umfassend einen oder mehrere Flugzeugsitze (24).

## Revendications

1. Dossier de siège (1) pour un siège d'aéronef, le dossier de siège (1) comprenant un corps (2), dans lequel le corps (2) comprend une paroi de support (3) pour supporter un passager appuyé contre le dossier de siège (1), une première paroi latérale (4a), une seconde paroi latérale (4b) et une traverse (5), dans lequel la traverse (5) relie la première paroi latérale (4a) et la seconde paroi latérale (4b) à une position entre une extrémité inférieure (6a) et une extrémité supérieure (6b) de chacune des parois latérales (4a, 4b), et dans lequel la paroi de support (3), la première paroi latérale (4a), la seconde paroi latérale (4b) et la traverse (5) sont formées d'un seul tenant, **caractérisé en ce que** la traverse (5) est formée par un évidement dans la paroi de support (3) du corps (2) et comprend une paroi arrière (5b).

2. Dossier de siège selon la revendication 1, dans lequel la traverse (5) comprend une ouverture orientée vers l'avant (5d) dans le corps (2).

3. Dossier de siège selon l'une quelconque des revendications précédentes, dans lequel la traverse (5) comprend un récepteur pour recevoir un loquet de table (19).

4. Dossier de siège selon l'une quelconque des revendications précédentes, dans lequel la traverse (5) comprend une cavité interne (8).

5. Dossier de siège selon la revendication 4, dans lequel la traverse (5) comprend une ou plusieurs ouvertures (9a, 9b), de préférence dans la paroi arrière (5b) de la traverse (5), pour permettre l'accès à la cavité interne (8), éventuellement dans lequel le corps (2) comprend un évidement supplémentaire (10) défini par les première (4a) et seconde (4b) parois latérales et la traverse (5), dans lequel ledit évidement supplémentaire (10) est au-dessus de la traverse (5), éventuellement dans lequel le dossier de siège (1) comprend un élément transversal (11) positionné en travers d'au moins une partie de l'évidement supplémentaire (10).

6. Dossier de siège selon l'une quelconque des revendications précédentes, dans lequel la traverse (5) forme la base d'une pochette à documents (21).

7. Dossier de siège selon l'une quelconque des revendications précédentes, dans lequel la traverse (5) comprend un capot (12), éventuellement dans lequel le corps (2) comprend un matériau déformable (14) positionné entre le capot (12) et la traverse (5).

8. Dossier de siège selon la revendication 7, dans lequel le capot (12) comprend une ou plusieurs ouvertures (23, 28a, 28b) pour permettre l'accès à la cavité interne (8) de la traverse (5), éventuellement dans lequel la traverse (5) comprend une ouverture (7) pour recevoir un loquet de table (19) ou un composant de celui-ci et le capot (12) comprend une ouverture (23) pour recevoir un loquet de table (19) ou un composant de celui-ci, dans lequel lesdites ouvertures (7, 23) de la traverse (5) et du capot (12) sont alignées lorsque le capot (12) est en position contre la traverse (5).

9. Dossier de siège selon la revendication 7 ou 8, dans lequel le capot (12) comprend une lèvre (13), facultativement dans lequel la lèvre (13) est sur une surface supérieure du capot (12), et/ou dans lequel la traverse (5) comprend un loquet (19) pour maintenir une tablette (20) contre le dossier de siège (1) et le loquet (19) traverse une ouverture (23) du capot (12) et est fixé à la traverse (5).

10. Dossier de siège selon l'une quelconque des revendications précédentes, dans lequel le dossier de siège (1) comprend un panneau (16) sur une surface orientée vers l'avant de la paroi de support (3) du corps (2), facultativement dans lequel le panneau (16) forme une paroi avant (5e) de la traverse (5), et/ou dans lequel le panneau (16) comprend une ou plusieurs ouvertures (17a, 17b), qui permettent l'accès à la/à une cavité (8) de la traverse (5).

11. Dossier de siège selon l'une quelconque des revendications précédentes, dans lequel le dossier de siège (1) comprend une ou plusieurs ouvertures (17a, 17b), qui permettent l'accès à la/une cavité (8) de la traverse (5), et un ou plusieurs canaux (18) reliés à ladite une ou plusieurs ouvertures (17a, 17b) pour permettre à un câble d'être maintenu à l'intérieur dudit un ou plusieurs canaux (18) et d'entrer dans la cavité (8) de la traverse (5) à travers ladite une ou plusieurs ouvertures (17a, 17b).

12. Siège de véhicule (24) comprenant un dossier de siège (1) selon l'une quelconque des revendications précédentes.

13. Rangée de sièges de véhicule comprenant une pluralité de sièges (24) selon la revendication 12.

14. Siège de véhicule selon la revendication 12 ou rangée de sièges de véhicule selon la revendication 13, comprenant un ou plusieurs sièges d'aéronef (24).
